# EUROPÄISCHE PATENTANMELDUNG

(11) **EP 4 757 143 A1**
(43) Veröffentlichungstag der Anmeldung: **10.06.2026**
(21) Anmeldenummer: 24217165.0
(22) Anmeldetag: 03.12.2024
(51) Int. Cl.: H02K 11/33, H02K 5/16, H02K 5/22

(54) **KONTAKTIEREINHEIT ZUR KONTAKTIERUNG EINER GEHÄUSEINTEGRIERTEN UMRICHTEREINHEIT**

(71) Anmelder: Innomotics GmbH, 90441 Nürnberg (DE)
(72) Erfinder: Deeg, Christian, 90518 Altdorf (DE); Jordan, Philipp, 96114 Hirschaid (DE); Katzenberger, Tobias, 97631 Bad Königshofen STT Untereßfeld (DE); Lehner, Johannes, 90762 Fürth (DE); Steinmüller, Marco, 97638 Mellrichstadt (DE); Tischmacher, Hans, 91207 Lauf (DE); Warmuth, Matthias, 97618 Windshausen (DE)
(74) Vertreter: Michalski Hüttermann & Partner mbB

(57) **Zusammenfassung**

Die Erfindung betrifft eine elektrische Maschine (10), insbesondere eine Drehstromasynchron- oder Drehstromsynchronmaschine, die in einem Gehäuse (5) untergebracht ist. Diese Maschine umfasst einen Stator (2), der Wicklungsleitungen (21) mit Leitungsenden (22) aufweist, welche mindestens eine Kontaktiereinheit (12) enthalten. Darüber hinaus verfügt die Maschine (10) über eine gehäuseintegrierte Umrichtereinheit (3), insbesondere eine in das lagerschildintegrierte Umrichtereinheit, die mindestens ein Kontaktiergegenstück (13, 14) umfasst. Dieses Kontaktiergegenstück beinhaltet sowohl elektrische Kontakte (13) als auch eine Fixiergeometrie (14), mittels der die Kontaktiereinheit (12) fixiert wird und die elektrisch leitend mit den elektrischen Kontakten verbunden ist. Vorgeschlagen wird des Weiteren ein Herstellungsverfahren für eine elektrische Maschine, bei dem mindestens eine Kontaktiereinheit (12) an den Leitungsenden der Wicklungsleitungen eines Stators (2) angebracht, ein Stator axial in ein Gehäuse (5) eingefügt wird und danach eine Umrichtereinheit mit einem Kontaktiergegenstück axial in das Gehäuse eingeschoben wird, bis die Umrichtereinheit (3) ihre Endposition erreicht hat. In dieser Endposition sind die Kontaktiereinheit (12) und das Kontaktiergegenstück (13, 14) derart zusammengefügt, dass der Stator (2) und die Umrichtereinheit (3) elektrisch leitend verbunden sind.

## Beschreibung

Die vorliegende Erfindung betrifft eine elektrische Maschine, insbesondere eine Drehstromasynchron- oder eine Drehstromsynchronmaschine, und ein Verfahren zur Montage einer elektrischen Maschine.

### Stand der Technik

Bisher wird die Statorwicklung einer elektrischen Maschine, wie Drehstromasynchron- und Drehstromsynchronmotoren, durch verschiedene Kontaktierungsmethoden wie Crimpen, Löten oder Schweißen mit Anschlussleitungen verbunden, die typischerweise Kabelschuhe an den Enden haben. Diese Anschlussleitungen werden zur Kontaktierung mit der notwendigen Spannungsversorgung manuell durch eine Gehäuseöffnung zu einem Klemmenbrett im Anschlusskasten geführt.

Für drehzahlveränderbare dynamoelektrische Maschinen, wie Elektromotoren, vor allem Synchron-, Asynchron-, und Reluktanzmotoren werden Frequenzumrichter zum Einstellen der gewünschten Drehzahl benötigt.

Bei dezentralen, insbesondere wandmontierten Umrichter-Ausführungen in Schaltschränken, erfolgt die Verbindung zwischen Umrichter und Motor über eine separate Zuleitung zum Klemmenbrett, während bei sogenannten integrierten Umrichter-Ausführungen die Anschlussleitungen direkt durch die Gehäuseöffnung zum Umrichter geführt werden. Bei diesen bisher im Stand der Technik als integrierte Umrichter bezeichneten Lösungen sind die Umrichtereinheiten auf eine Gehäuseöffnung der elektrischen Maschine aufgesetzt. Alternativ wird von motormontierten Umrichtern gesprochen. Auch hier werden die Anschlussleitungen zumeist manuell herausgeführt. Diese Vorgehensweise führt zu hohen Montagekosten, insbesondere bei kleineren Baugrößen, und beeinträchtigt die Kompaktheit des Antriebssystems.

Zusätzliche Leitungen für thermische Überwachung oder andere Einbauteile werden ebenso manuell durch die Gehäuseöffnung geführt, was den manuellen Aufwand noch weiter erhöht. Diese Methoden erfordern die Verwendung von Aderendhülsen und die Kontaktierung mittels Lüsterklemmen oder Cage-Clamp-Kontakten, was ebenfalls die Komplexität und die Kosten erhöht.

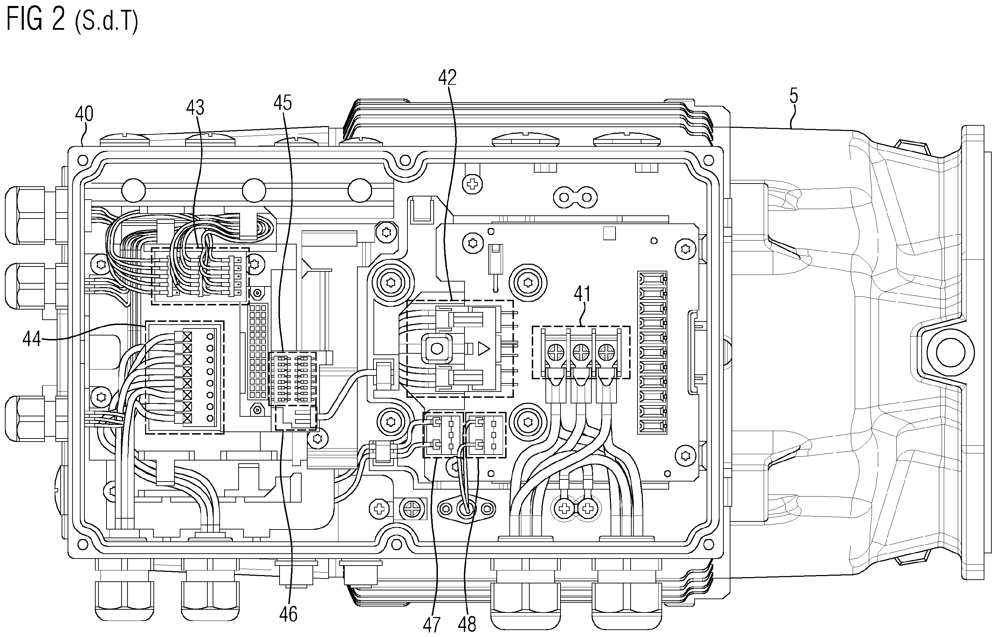

Bisher, wie beispielsweise in Figur 2 illustriert, erfolgt also die Kontaktierung der Energieleitung, der Signalleitungen und der Umrichteranschlüsse auf einem Klemmbrett im Klemmenkasten am Motorgehäuse. Diese Ausführung der Montage direkt am Gehäuse benötigt viel Bauraum und macht den Antrieb vergleichsweise groß und schwer.

Die bestehenden Lösungen schränken des Weiteren die Modularität und Austauschbarkeit der Antriebssysteme ein und führen zu einem erhöhten Platzbedarf und manuellen Arbeitsaufwand beim Anschluss der Komponenten. Ein weiterer Nachteil der bestehenden Methoden ist die Notwendigkeit, jede Komponente einzeln zu verbinden, was sowohl zeitaufwendig als auch anfällig für Fehler ist. Alternativmaterialien oder alternative Designs für die Kontaktierung wurden bislang kaum genutzt, da die bestehenden Methoden auf Industriestandards und etablierten Praktiken basieren.

Ansätze, bei denen Motor und Umrichter axial hintereinander angeordnet werden, sind beispielsweise aus der EP 0 854 560 A1 bekannt. Bisher jedoch benötigen Ausführungen von Umrichtern direkt am Motor viel Bauraum, da das Lager zwischen Motor und Umrichter ist. Dies macht den Antrieb vergleichsweise groß und schwer.

Aus der DE 10 2004 031 399 A1 beispielsweise ist ein Umrichtermotor mit einem eigenbelüfteten Elektromotor und einem Frequenzumrichter bekannt, wobei in einem topfförmigen Lagerschild Bauteile des Frequenzumrichters am Boden des topfförmigen Lagerschildes angeordnet sind. Auch dieser Antrieb benötigt vergleichsweise viel Bauraum.

Die DE 10 2004 028 824 A1 beispielsweise offenbart einen Ansatz zur Übertragung von Steuersignalen mittels Lichtleitverbindungen, welcher Herausforderungen wie dem manuellen Montageaufwand, der baulichen Komplexität und den Kosten kaum begegnet und zudem vibrationsanfällig ist. Aus der DE 10 2019 218 002 A1 sind Folienkontakte bekannte, welche den manuellen Montageaufwand ebensowenig erheblich reduzieren und zudem vibrationsanfällig ist.

Folglich stellt es sich als technisch erforderlich dar, eine verbesserte Lösung vorzuschlagen, welche die aus dem Stand der Technik bekannten Nachteile vermeidet. Insbesondere soll die vorzuschlagende Lösung eine erhöhte Kompaktheit bei gleichzeitig vereinfachter Montage ermöglichen.

Diese der vorliegenden Erfindung zugrunde liegenden Aufgaben werden durch eine elektrische Maschine gemäß dem Patentanspruch 1 gelöst. Die auf die Montage bezogene Aufgabe wird gelöst durch ein Herstellungsverfahren gemäß Patentanspruch 10. Vorteile und Ausgestaltungen der Erfindung, die einzeln oder in Kombination miteinander einsetzbar sind, sind Gegenstand der Unteransprüche.

### Beschreibung der Erfindung

Die erfindungsgemäße elektrische Maschine, insbesondere eine Drehstromasynchron- oder Drehstromsynchronmaschine, ist in einem Gehäuse angeordnet, umfassend einen Stator mit Wicklungsleitungen mit Leitungsenden, welche wenigstens eine Kontaktiereinheit aufweisen, eine gehäuseintegrierte Umrichtereinheit, insbesondere eine lagerschildintegrierte Umrichtereinheit, welche wenigstens ein Kontaktiergegenstück aufweist, wobei das Kontaktiergegenstück sowohl elektrische Kontakte als auch eine Fixiergeometrie aufweist, mittels welcher die Kontaktiereinheit fixiert ist, und mit den elektrischen Kontakten elektrisch leitend verbunden sind.

Im Kontext dieser Anmeldung kann es sich sowohl um die Leitungsenden der Statorwicklungen als auch um diverse zusätzliche Sensorleitungen, wie beispielsweise die eines Temperatursensors handeln. Es können alle Leitungsenden in eine oder mehrere Kontaktiereinheiten münden. Die Maschine umfasst eine integrierte Umrichterlösung, welche zusammen mit der Kontaktiereinheit für hohe Kompaktheit sorgt. Ein Teil der vorgeschlagenen Lösung besteht darin, die Leistungselektronik in das Gehäuse, insbesondere in das Lagerschild zu integrieren. Eine besondere Herausforderung stellt dabei der begrenzte Bauraum und die runde Ausführung der Umrichterlösung dar.

Die Umrichtereinheit ist eine Komponente, die dafür verantwortlich ist, Strom in eine Form zu wandeln, wie sie für die zu betreibende elektrische Maschine notwendig ist.

Die Wicklungsleitungen sind die elektrischen Leiter, die die Wicklungen des Stators bilden und den Strom leiten, um das notwendige magnetische Feld zu erzeugen. Unter Kontaktiereinheit und Kontaktiergegenstück werden insbesondere Stecker und Buchsen verstanden, wobei Stecker und Buchse auch vertauscht sein können. Stator-Leitungsenden können in Stecker münden und die Buchsen können in der Umrichtereinheit integriert sein oder umgekehrt. Unter einem Gehäuse ist die Umbauung der elektrischen Maschine zu verstehen, welche insbesondere Kühlelemente, Befestigungselemente und die Herausführung der Energieleitungen bereitstellt. Kühlelemente sind typischerweise Kühlrippen.

Unter einer gehäuseintegrierten Umrichtereinheit ist zu verstehen, dass der Umrichter oder einzelne Komponenten des Umrichters innerhalb des Gehäuses angeordnet ist. Dies bewirkt, dass die elektrische Anbindung auch innerhalb des Gehäuses erfolgt und nicht aus dem Gehäuse herausgeführt wird. Es könnte auch von (Motor)innenraum-positionierter Umrichtereinheit gesprochen werden. Um eine Umrichtereinheit im Gehäuse zu integrieren, kann diese insbesondere an der Gehäuserauminnenwand befestigt sein. Besonders vorteilhaft ist eine lagerschildintegrierte Umrichtereinheit, wie sie beispielsweise in der EP 24199792.3 oder in der EP 24200040.4 vorgeschlagen werden. Auch eine kombinierte Lösung, bei der die Umrichtereinheit teilweise im Gehäuse und teilweise im Lagerschild integriert ist, ist denkbar. Derartige Ausführungsformen einer gehäuseintegrierten Umrichtereinheit können als Ausgangsbasis für die hier vorgeschlagene Lösung herangezogen werden.

Ein Vorteil der vorgeschlagenen Lösung liegt insbesondere in der einfachen Montage ohne die Notwendigkeit, einzelne Leitungen durchzuführen. Ein weiterer Vorteil ist eine Lösung für die Herausforderung der Bauraumnutzung anzugeben. Besonders bevorzugt sind runde Umrichter-ausführungen. Bevorzugte Durchmesser richten sich nach dem Statordurchmesser. Dieser kann insbesondere bei circa 10 cm bis 15 cm liegen. Die vorgeschlagene Lösung kann auch für andere Leistungsklassen interessant sein. Insbesondere wird die vorgeschlagene Lösung in Drehstromasynchron- oder Drehstromsynchronmaschinen mit 1 kW bis 15 kW Leistung und Achshöhen von 80 mm bis 160 mm eingesetzt. Auch in Motoren mit bis zu 90 kW Leistung und Achshöhen bis zu 280 mm, kann die Lösung Anwendung finden.

Vorteilhafte Anwendung der Erfindung ist beispielsweise möglich in einem Antrieb, mit mindestens einer dynamoelektrischen rotatorischen Maschine, die in einem Gehäuse angeordnet ist, mit einem in einem Stator angeordneten Wicklungssystem und einem durch einen Luftspalt davon getrennten Rotor, der über mindestens ein Lager eines topfähnlichen Lagerschilds um eine Achse drehbar gelagert ist. Stator und Rotor befinden sich in einem Motorinnenraum. Dazu umfasst ist bevorzugt ein Umrichter, der mindestens einige der folgenden Bauelemente wie Leistungshalbleiter, Drosseln, Kondensatoren, Steuer- und Regeleinheiten sowie Kommunikationseinheiten aufweist und sich in einem Umrichterbauraum befindet, der zumindest abschnittsweise von dem Lagerschild radial umgeben ist. Einige Bauelemente des Umrichters sind mit dem Lagerschild thermisch leitend verbunden, indem insbesondere wärmeintensive Bauelemente des Umrichters an einer inneren Seitenwand des topfähnlichen Lagerschilds angeordnet sind. Bevorzugt ist der Umrichter axial betrachtet zwischen der dynamoelektrischen rotatorischen Maschine und dem Lager des topfähnlichen Lagerschilds angeordnet. Motorinnenraum und Umrichterbauraum sind insbesondere durch ein Abschirmelement getrennt.

In einer vorteilhaften Ausführungsform der erfindungsgemäßen elektrischen Maschine ist der Stator in das Gehäuse eingefügt oder eingepresst. Dies hat den Vorteil, dass eine entsprechende Einpassung des Stators in das Gehäuse geschaffen ist, welche einen vergleichsweise guten Wärmeübergang vom Blechpaket des Stators auf das Gehäuse und optionale Gehäuserippen schafft.

In einer weiteren vorteilhaften Ausführungsform der erfindungsgemäßen elektrischen Maschine ist die Kontaktiereinheit eine Steckkontaktiereinheit und weist Buchsen, insbesondere Kunststoffbuchsen, auf, während das Kontaktiergegenstück Pins, insbesondere Kupferpins, aufweist, oder die Kontaktiereinheit weist Pins, insbesondere Kupferpins, auf und das Kontaktiergegenstück Buchsen, insbesondere Kunststoffbuchsen. Zweckdienlicherweise sind die Kontaktiereinheiten und die Kontaktiergegenstücke passend zueinander angeordnet. Zudem sind die Kontaktiereinheiten, die Kontaktiergegenstücke und die Fixierungsgeometrien in ihrer Position komplementär und ich ihrer Anzahl identisch. Sobald der Umrichter seine Endposition im Gehäuse erreicht hat, sind alle Buchsen und Stecker von Stator und Umrichter vollständig ineinandergesteckt. Auf diese Weise ist der Stator vollständig mit dem Umrichter kontaktiert.

In einer weiteren vorteilhaften Ausführungsform der erfindungsgemäßen elektrischen Maschine weist die gehäuseintegrierte Umrichtereinheit eine Ausnehmung auf, in welcher die Kontaktiereinheit angebracht ist. Bevorzugt ist die Kontaktiereinheit in die Ausnehmung der gehäuseintegrierten Umrichtereinheit eingefügt oder eingepresst. Die Buchse und der Stecker sind dabei vorteilhafterweise so gestaltet, dass sie mögliche Relativbewegungen zwischen dem Stator und dem Umrichter ausgleichen können, ohne dass die elektrische Verbindung unterbrochen wird. Dies stellt sicher, dass die Kontaktierung stabil bleibt und nicht abbricht.

In einer weiteren vorteilhaften Ausführungsform der erfindungsgemäßen elektrischen Maschine münden zusätzliche Leitungsenden, insbesondere die Leitungsenden von Thermofühlern und/oder Anbauelementen, zusammen mit den Leitungsenden der Wicklungsleitungen in die Kontaktiereinheit. Alternativ oder zusätzlich weisen zusätzliche Leitungsenden, insbesondere die Leitungsenden von Thermofühlern und/oder Anbauelementen, eine weitere Kontaktiereinheit auf. Diese Ausgestaltungen haben den Vorteil, dass der Stator vollständig mit dem Umrichter kontaktiert werden kann, und sich eine Kabelherausführung auf die Anschlüsse für die Versorgungsspannung beschränkt.

In einer weiteren vorteilhaften Ausführungsform der erfindungsgemäßen elektrischen Maschine sind zusätzliche Fixierungsgeometrien vorgesehen, mittels welcher die gehäuseintegrierte Umrichtereinheit am Stator fixiert ist. Alternativ oder zusätzlich sind Fixierungsgeometrien vorgesehen, mittels welcher die gehäuseintegrierte Umrichtereinheit an der Gehäuseinnenwand fixiert ist. Vorteilhafterweise gewährleisten vorhandene Fixiergeometrien kraftschlüssige Verbindungen von Stator und/oder Umrichtereinheit mit dem Gehäuse, wodurch zusätzlich die Stabilität erhöht wird.

Das erfindungsgemäße Herstellungsverfahren für eine elektrische Maschine nach einer der vorstehend beschriebenen Ausführungsformen umfasst folgende Montageschritte: Anbringen wenigstens einer Kontaktiereinheit an Leitungsenden der Wicklungsleitungen eines Stators, axiales Einfügen oder Einpressen des Stators in ein Gehäuse, axiales Einschieben einer Umrichtereinheit mit Kontaktiergegenstück in das Gehäuse bis zu einer Endposition der Umrichtereinheit, in welcher Endposition Kontaktiereinheit und Kontaktiergegenstück so zusammengefügt sind, dass Stator und Umrichtereinheit elektrisch leitend verbunden sind.

Einer der Vorteile der vorgeschlagenen Lösung besteht darin, dass die axiale Montage des Umrichters in das Gehäuse gleichzeitig zur Kontaktierung verwendet wird. Ein weiterer Vorteil besteht darin, dass bewährte Montageverfahren wie das Einpressen oder Einfügen verwendet werden können. Damit bleiben etablierte Abläufe erhalten. Des Weiteren wird die Komponentenanzahl reduziert. Das Einpressen hat noch den zusätzlichen Vorteil für eine sehr gute Wärmeanbindung ans Gehäuse zu sorgen. Darüber hinaus sind alle vorgeschlagenen Montage- beziehungsweise Fixierungsmechanismen mechanischer Art. Die Meisten davon stellen lösbare Verbindungen dar, die vorteilhaft für Reparatur und Rückbau sind.

In einer vorteilhaften Variante des erfindungsgemäßen Herstellungsverfahrens erfolgt das Anbringen der Kontaktiereinheit an den Leitungsenden der Wicklungsleitungen eines Stators mittels Crimpen, Stecken oder CageClamp. Die Statorleitungsenden sind also nicht mit den üblichen Kontaktiermaterialien ausgestattet, zum Beispiel Kabelschuh, Aderendhülse, sondern sind an eine Buchse, bevorzugt an eine Kunststoffbuchse kontaktiert. Die Kontaktierung in der Buchse selbst kann über die üblichen Technologien wie Crimpen, Stecken, oder CageClamp erfolgen.

In einer weiteren vorteilhaften Variante des erfindungsgemäßen Herstellungsverfahrens erfolgt zusätzlich der Montageschritt des Anbringens wenigstens einer Kontaktiereinheit an weiteren Leitungsenden des Stators, insbesondere an Leitungsenden von Thermofühlern und/oder Anbauelementen.

In einer weiteren vorteilhaften Variante des erfindungsgemäßen Herstellungsverfahrens erfolgt zusätzlich der Vorabmontageschritt, wenigstens eine Fixiergeometrie für die Kontaktiereinheit in der gehäuseintegrierten Umrichtereinheit auszugestalten, insbesondere eine Fixiergeometrie als Aufnahme, insbesondere Ausnehmung oder Ausbuchtung in der Außengeometrie der Umrichtereinheit auszugestalten, in welche Kontaktiereinheit eingeschoben wird. Dies erleichtert die Montage und erhöht die Stabilität, insbesondere was die Langlebigkeit der Kontakte angeht.

Alternativ oder zusätzlich erfolgt ein Vorabmontageschritt, wenigstens eine Fixiergeometrie für die Kontaktiereinheit in der gehäuseintegrierten Umrichtereinheit auszugestalten, insbesondere eine Fixiergeometrie als Auswölbung, insbesondere Pin oder Nase, auszugestalten, auf welche die Kontaktiereinheit aufgeschoben oder aufgepresst wird. Dies ist eine Ergänzung oder Alternative zu den Aufnahmen und erleichtert ebenfalls die Montage und erhöht die Stabilität, insbesondere was die Langlebigkeit der Kontakte angeht.

Vorteilhafterweise erfolgt wenigstens einer der Montageschritte halbautomatisiert oder automatisiert.

Ein wichtiger Vorteil des vorgeschlagenen Montageverfahrens liegt in der Zusammenführung von Kontaktierung und Montage in einem einzigen Prozessschritt. Durch das Einfügen des Umrichters in das Gehäuse wird gleichermaßen die Kontaktierung hergestellt. Der Aufwand zum Vorbereiten der Leitungsenden des Stators bleibt nahezu identisch, da anstelle von Kabelschuhen nun Buchsen oder Stecker angebracht werden. Des Weiteren ist eine Kontaktierung der Statorleitungen und Umrichteranschlüsse im Klemmbrett nicht mehr erforderlich. Auch die Durchführung der Statorleitungen durch die Gehäuseöffnung entfällt, was zu einer erheblichen Reduzierung des Bauraums im Anschlussbereich führt. Das sehr große Klemmbrett mit einer Vielzahl an Anschlüssen reduziert sich auf die drei Anschlüsse der Energiezuleitung und eventuell Schnittstellenanschlüsse. Dadurch können Kosten für zusätzliche Komponenten wie einem Hilfsklemmkasten und dessen Montage eingespart werden. Zusammengefasst: Die Vorteile der vorgeschlagenen Lösung umfassen die Kontaktierung und Montage in einem Prozessschritt, was zu einer Kostenreduktion durch weniger Prozessschritte führt. Auch die Anzahl der benötigten Anbauteile, wie beispielsweise ein Hilfsklemmbrett, wird reduziert. Zudem verringert sich das manuelle Handling der Leitungen, wie Kabeldurchführung und Anschlussarbeiten im Klemmkasten.

### Figurenbeschreibung:

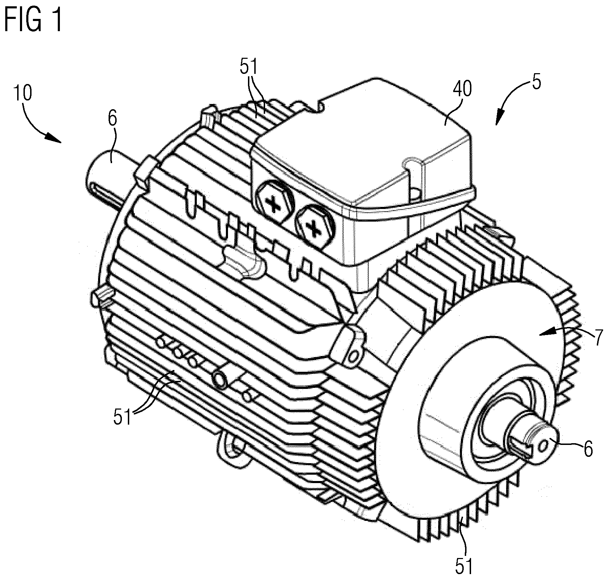

Beispiele und Ausführungsformen der vorliegenden Erfindung werden noch in exemplarischer Weise mit Bezug auf die Figuren 1 bis 5 der angehängten Zeichnung beschrieben. In den Ausführungsbeispielen und Figuren können gleiche oder gleich wirkende Elemente jeweils mit den gleichen Bezugszeichen versehen sein. Die dargestellten Elemente und deren Größenverhältnisse untereinander sind grundsätzlich nicht als maßstabsgerecht anzusehen, vielmehr können einzelne Elemente, zur besseren Darstellbarkeit und/oder zum besseren Verständnis im Verhältnis größer dimensioniert dargestellt sein.

Obwohl die Erfindung im Detail durch das bevorzugte Ausführungsbeispiel näher illustriert und beschrieben wird, ist sie nicht durch die offenbarten Beispiele eingeschränkt. Variationen hiervon können vom Fachmann abgeleitet werden, ohne den Schutzumfang der Erfindung, wie er durch die Patentansprüche definiert wird, zu verlassen.
- Figur 1: zeigt schematisch eine elektrische Maschine 10, insbesondere einen Motor, mit motormontiertem Umrichter in einem Klemmenkasten 40,
- Figur 2: eine Kontaktierung, gemäß Stand der Technik, einer Energieleitung, von Signal- und Umrichteranschlüssen auf einem Klemmbrett auf einem Gehäuse 5,
- Figur 3: einen Schnitt durch eine erfindungsgemäße elektrische Maschine 10, in der eine gehäuseintegrierte Umrichtereinheit 3 mittels einer Kontaktiereinheit 12 die Statorleitungen 22 kontaktiert und
- Figur 4: eine teilperspektivische Darstellung der Komponenten Stator 2 und Umrichtereinheit 3 entlang ihrer Montageachse sowie
- Figur 5: eine vergrößerte Darstellung eines Ausschnitts aus der Figur 3, die Kontaktiereinheit 12 zeigend.

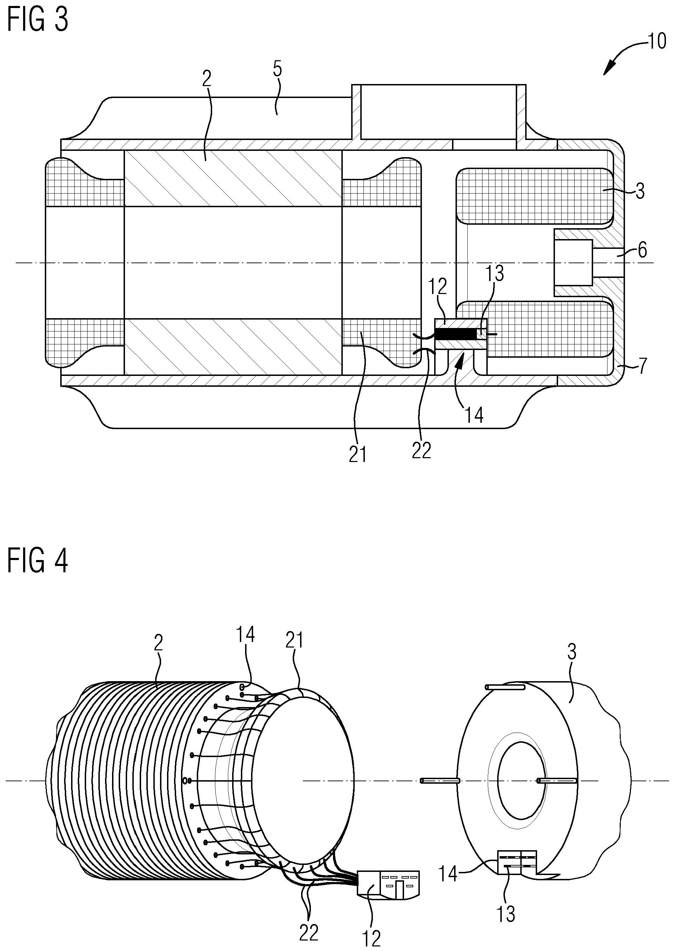

In der Figur 1 ist zunächst eine perspektivische Darstellung der Aussenansicht einer elektrischen Maschine 10 in einem Gehäuse 5 gezeigt, mit einer Lageraufnahme am Boden des Lagerschildes 7. Beidseitig ragt die Welle 6 aus dem Gehäuse 5. Auf der Stator-Seite, vergleiche Figur 3, wird die Arbeitsmaschine, wie z.B. ein Kompressor oder eine Pumpe an die Welle 6 angeschlossen. Auf der Seite des Lagerschildes 7 sind modulartige Anbauten wie eine Bremseinheit, Fremdlüftermodul, oder ein Geber bzw. Drehimpulsgeber anbringbar. Es sind Kühlrippen 51 an der Gehäuseaußenwand gezeigt. Der Klemmenkasten 40 ist kleiner dimensioniert dargestellt, als für bisher übliche Klemmbretter notwendig, vergleiche Figur 2. Der Klemmenkasten 40 ist durch Einsatz der erfindungsgemäß vorgeschlagenen Lösung noch weiter verkleinerbar bis hin zu gar nicht mehr von Bedarf.

Für den elektrischen Anschluss von elektrischen Maschinen 10, beispielsweise Elektromotoren werden an die Enden der Wicklungsphasen Anschlussleitungen 22 elektrisch kontaktiert. Besonders interessant ist die vorgeschlagene Lösung für Drehstromasynchron -bzw. Drehstromsynchronmotoren. Die Kontaktierung erfolgt über Verfahren wie z.B. crimpen, löten oder schweißen. An den Enden der Anschlussleitungen 22 befinden sich üblicherweise Kabelschuhe. Diese Leitungen werden bisher händisch durch eine Gehäuseöffnung üblicherweise auf das Klemmenbrett im Anschlusskasten 40 geführt, um die Anschlüsse dem Kunden benutzerfreundlich bereit zu stellen. Bei dezentralen, sogenannten wandmontierten Umrichter-Ausführungen erfolgt der Anschluss zwischen Umrichter 3 und Stator 2 über eine Zuleitung zum Klemmenbrett. Bei integrierten, sogenannten aufgesetzten bzw. motormontierten Umrichter-Ausführungen, wie beispielsweise in Figur 2 gezeigt, werden bisher die Anschlussleitungen 41 durch die Gehäuseöffnung direkt zum Umrichter 3 geführt. Die Anschlussleitungen für die Netzspannung 41 sind dabei üblicherweise mit Aderendhülsen ausgeführt, die Kontaktierung erfolgt mittels Lüsterklemmen oder Cage-Clamp-Kontakten.

Zusätzlich zu den Spannungsanschlussleitungen 41 gibt es optional die Möglichkeit weiterer Leitungen 46, 47, zum Beispiel für die thermische Motorüberwachung 46 oder andere Einbauteile, wie z.B. eine Stillstandsheizung, welche ebenfalls händisch durch die Gehäuseöffnung in den Anschlusskasten 40 bzw. direkt in den motormontierten Umrichter 3 geführt werden können. Im Anschlusskasten 40 erfolgen Anschlüsse üblicherweise auf Lüsterklemme. Des Weiteren sind in Figur 2 Anschlüsse für den Motor 42, Anschlüsse für Digitaleingänge und -ausgänge 43, Anschlüsse für eine 24Volt-Netzteil 44, geschaltet/ungeschaltet, Anschlüsse für DIP-Schalter 45 (Dual In-line Package Schalter), Anschlüsse für Motortemperatursensor 46, Anschlüsse für eine Bremswiderstandsmessung 47 sowie Anschlüsse für eine EM-Bremse, zum Beispiel 180 V, gezeigt. Die vorgeschlagene Lösung vermeidet vorteilhaft den bisher großen manuellen Aufwand, die Ständerleitungen 21 und zusätzliche Leitungen von der Wicklung durch die Gehäuseöffnung zu führen, und reduziert demnach, besonders bei kleineren Baugrößen, die bislang unverhältnismäßig hohen Montagekosten.

Anders als bei bisherigen sogenannten integrierten Umrichterausführungen, welche tatsächlich aber montierte oder aufgesetzte Umrichterlösung sind, vergleiche Figur 2, ist die hier vorgeschlagene gehäuseintegrierte Umrichtereinheit 3 auch tatsächlich im Gehäuse 5 integriert, siehe Figuren 3 und 4. Insbesondere ist die gehäuseintegrierte Umrichtereinheit 3 radial um die Welle 6 herum angeordnet und direkt an die Statorleitungen 22 anschließbar.

Es ist gezeigt, dass Stator 2, Wickelkopf 21 und Umrichter 3 axial hintereinander angeordnet sind. In der in Figur 3 gezeigten Ausführung ist eine Verschaltung beziehungsweise Kontaktierung der Statorleitungen 22 an ein Klemmbrett nicht notwendig.

Die vorgeschlagene Lösung sieht vor, den Umrichter 3 direkt im Innenraum des Motors zu integrieren, beispielsweise im Gehäuse 5 in axialer Richtung hinter dem Stator 2 mit Wicklung 21 oder im Lagerschild 7. Eine kombinierte Lösung, bei der der Umrichter 3 sowohl im Gehäuse 5 als auch im Lagerschild 7 untergebracht ist, ist ebenfalls denkbar. Da der Stator 2, der Wickelkopf 21 und der Umrichter 3 axial hintereinander angeordnet sind, wie in Figur 3 dargestellt, ist eine Verschaltung beziehungsweise Kontaktierung der Statorleitungen 22 am Umrichter 3 im Klemmbrett durch die vorgeschlagene Lösung nicht notwendig.

Stattdessen münden die Statorleitungen 22 in eine Kontaktiereinheit 12, welche ihr Kontaktiergegenstück in einer Fixiergeometrie 14 in der Umrichtereinheit 3 findet. Beim Einsetzen des Umrichters 3 in das Gehäuse 5 greifen die Steckerkontakte 13 des Umrichters 3 passgenau in die Buchsen der Statorleitungen 22. Dies ermöglicht eine unmittelbare und sichere elektrische Verbindung. Die Kontaktflächen sind so gestaltet, dass sie Relativbewegungen zwischen Stator 2 und Umrichter 3 ausgleichen können. Diese Lösung vereinfacht die Montage, da die Kontaktierung und Montage in einem einzigen Schritt erfolgen, wodurch Prozessschritte und Bauteile, wie zusätzliche Klemmbretter, entfallen. Das führt zu einer signifikanten Kostensenkung und erhöht die Kompaktheit des Antriebssystems.

In Figur 3 ist eine Skizze eines Querschnitts durch eine elektrische Maschine 10 gezeigt, deren Stator 2 mit montiertem Steckkontakt 12 dargestellt ist. Im Gehäuse 5 ist die Umrichtereinheit 3 gezeigt, welche eine Ausnehmung 14 aufweist, die in ihrer Ausformung auf die Aufnahme des Steckkontakts 12 ausgebildet ist. Der Steckkontakt 12 weist insbesondere Buchsen auf, wie sie in der Seitenansicht der Figur 4 besser zu erkennen sind und die zur Aufnahme der Pins 13 vorgesehen sind, welche sich in der Ausnehmung 14 befinden. Die Ausnehmung 14 ist zugleich durch ihre Geometrie geeignet, eine mechanische Fixierung des Steckkontakts 12 zu gewährleisten.

In der Darstellung der Figur 4 ist gezeigt, wie die axiale Montage des Umrichters 3 in das Gehäuse 5 auch zur Kontaktierung genutzt wird. Die Enden der Statorleitungen 22 sind jedoch nicht mit den üblichen Kontaktmaterialien wie Kabelschuhen oder Aderendhülsen ausgestattet, sondern sind an eine Steckerkontakteinheit 12 angeschlossen. Ebenso sind weitere Kabelenden, beispielsweise von Thermofühlern oder Anbauelementen, mit dieser Steckerkontakteinheit 12 verbunden. Die Kontaktierung in der Buchse 12 selbst kann über die üblichen Technologien wie Crimpen, Stecken oder CageClamp erfolgen. In der Gehäusewandung 5 kann eine oder mehrere Fixiergeometrien vorgesehen sein, an welche die Steckerkontakteinheit 12 des Stators 2 angebracht beziehungsweise zusätzlich fixiert werden kann. Alternativ erfolgt eine Fixierung gleichzeitig mit der Kontaktierung über die Fixiergeometrie 14 an der Umrichtereinheit 3. Stator 2 und Umrichtereinheit 3 können in das Gehäuse 5 eingepresst sein. Es können alternativ oder zusätzlich Fixiergeometrien 14 vorgesehen sein, die auch abseits der elektrischen Kontaktierung 12, 13 eine mechanische Verbindung zwischen Stator 2 und Umrichtereinheit 3 schaffen. Die Statorleitungen 22, die an den Enden mit einer oder mehreren Steckerkontakteinheiten 12 versehen sind, können also radial an die Gehäuseinnenwand 5 und/oder an die Fixiergeometrie(n) 14 montiert sein. Die Montage auf die Fixiergeometrie 14 kann manuell oder auch automatisiert erfolgen.

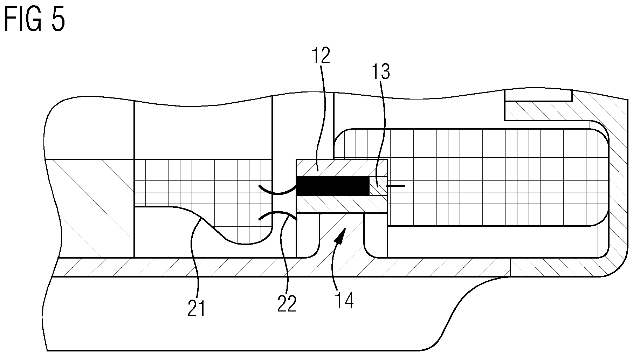

Beispielsweise wird der Umrichter 3 in das Gehäuse 5 montiert, indem er axial eingeschoben beziehungsweise gefügt oder gepresst wird. Im Design der Umrichtereinheit 3 befinden sich entsprechende Steckkontakte 13. Diese Stecker 13 sind in ihrer Position komplementär und in ihrer Anzahl identisch zu den Buchsen in der Kontaktiereinheit 12 des Stators 2. Sobald der Umrichter 3 seine Endposition erreicht hat, stecken alle Buchsen und Stecker 13 von Stator 2 und Umrichter 3 ineinander. Dadurch ist der Stator 2 vollständig mit dem Umrichter 3 kontaktiert, wie in Figur 5 verdeutlicht dargestellt wird.

Die Kontaktflächen zwischen Kontaktiereinheit 12 und Aufnahme 14 müssen so ausgelegt sein, dass mögliche Relativbewegungen von Stator 2 und Umrichter 3 ausgeglichen werden können, ohne dass die elektrische Kontaktierung selbst abbricht. Die Stecker 13 am Umrichter 3 können sowohl auf der Stirnseite des Umrichters 3 aufgesetzt als auch im Design integriert sein, wie im Beispiel, das in den Figuren 3 bis 5 gezeigt ist, in der Ausnehmung 14. Ebenfalls ist es möglich, dass Stecker 13 und Buchsen 12 vertauscht sind. In solch einem Fall wären die Enden der Statorleitungen 22 mit Steckern ausgestattet und die Buchsen im Umrichter 3 integriert.

Figur 5 zeigt einen vergrößerten Ausschnitt aus der Schnittdarstellung der Figur 3. Erkennbar ist die Einbausituation des Stators 2 mit dem Kontaktblock 12 in der Fixiergeometrie 14 der Umrichtereinheit 3. Ein wesentlicher Vorteil dieser Montageweise liegt in der Zusammenführung von Kontaktierung und Montage in einem einzigen Prozessschritt: Durch das Einfügen des Umrichters 3 in das Gehäuse 5, vergleiche Figuren 3 und 4, wird gleichzeitig die elektrische Kontaktierung hergestellt.

Der Aufwand zur Vorbereitung der Leitungsenden 22 des Stators 2 bleibt nahezu identisch zu bisherigen Montageverfahren. Anstatt Kabelschuhen werden nun Buchsen oder Stecker in Form einer Kontakiereinheit 12 angebracht. Zudem entfällt die Notwendigkeit, die Statorleitungen 22 und Umrichteranschlüsse in einem Klemmbrett zu verbinden. Auch die Durchführung der Statorleitungen 22 durch die Gehäuseöffnung ist nicht mehr erforderlich. Dies führt zu einer erheblichen Reduzierung des Platzbedarfs im Anschlussbereich, da das überlicherweise sehr große Klemmbrett mit zahlreichen Anschlüssen, vergleiche Figur 2, auf die drei Anschlüsse der Energiezuleitung 41 und eventuell Schnittstellenanschlüsse reduziert wird. Dadurch können Kosten für beispielsweise einen Hilfsklemmkasten und ein zusätzliches Klemmbrett sowie deren Montage eingespart werden.

Vorteile der vorgeschlagenen Lösung sind somit vielfältig. Erstens werden Kontaktierung und Montage in einem einzigen Prozessschritt zusammengeführt, was die Effizienz erhöht. Zweitens ergibt sich eine Kostenreduktion durch die Verringerung der Anzahl der Prozessschritte. Drittens werden die Kosten durch den Wegfall von Anbauteilen, wie beispielsweise einem Hilfsklemmbrett, weiter gesenkt. Darüber hinaus wird das manuelle Handling der Leitungen, wie etwa die Kabeldurchführung und die Anschlussarbeiten im Klemmkasten, reduziert. Schließlich führt die vorgeschlagene Lösung zu einer baulichen Minimierung der Anschlusskästen bei umrichterintegrierten Lösungen.

Zusammenfassend sei also festegehalten, dass eine elektrische Maschine 10 vorgeschlagen wird, insbesondere eine Drehstromasynchron- oder Drehstromsynchronmaschine, die in einem Gehäuse 5 untergebracht ist. Diese Maschine umfasst einen Stator 2, der Wicklungsleitungen 21 mit Leitungsenden 22 aufweist, welche mindestens eine Kontaktiereinheit 12 enthalten. Darüber hinaus verfügt die Maschine 10 über eine gehäuseintegrierte Umrichtereinheit 3, insbesondere eine in das lagerschildintegrierte Umrichtereinheit, die mindestens ein Kontaktiergegenstück 13, 14 umfasst. Dieses Kontaktiergegenstück beinhaltet sowohl elektrische Kontakte 13 als auch eine Fixiergeometrie 14, mittels der die Kontaktiereinheit 12 fixiert wird und die elektrisch leitend mit den elektrischen Kontakten verbunden ist. Vorgeschlagen wird des Weiteren ein Herstellungsverfahren für eine elektrische Maschine, bei dem mindestens eine Kontaktiereinheit 12 an den Leitungsenden der Wicklungsleitungen eines Stators 2 angebracht, ein Stator axial in ein Gehäuse 5 eingefügt wird und danach eine Umrichtereinheit mit einem Kontaktiergegenstück axial in das Gehäuse eingeschoben wird, bis die Umrichtereinheit 3 ihre Endposition erreicht hat. In dieser Endposition sind die Kontaktiereinheit 12 und das Kontaktiergegenstück 13, 14 derart zusammengefügt, dass der Stator 2 und die Umrichtereinheit 3 elektrisch leitend verbunden sind.

### Bezugszeichenliste

- 10: elektrische Maschine
- 14: Fixiergeometrien, zum Beispiel Aufnahmen, Adapter
- 2: Stator
- 21: Wicklungssystem, beziehungsweise Statorwickelkopf des Wicklungssystems
- 22: Statorleitungen
- 12: Kontaktiereinheit, zum Beispiel Buchsen
- 3: Umrichtereinheit
- 13: Kontaktiergegenstücke, zum Beispiel Kontakte (Pins)
- 40: Klemmenkasten, Gehäuseöffnung
- 5: (Motorgehäuse
- 51: Kühlrippen
- 6: Welle
- 7: Lagerschild
- 41: Anschlüsse Netzspannung
- 42: Anschlüsse Motor
- 43: Anschlüsse Digitaleingänge/-ausgänge
- 44: Anschlüsse Netzteil
- 45: DIP-Schalter
- 46: Anschlüsse Temperatursensor
- 47: Anschlüsse Bremswiderstand
- 48: Anschlüsse EM-Bremse

## Patentansprüche

1. Elektrische Maschine (10), insbesondere Drehstromasynchron- oder Drehstromsynchronmaschine, in einem Gehäuse (5) umfassend
einen Stator (2) umfassend Wicklungsleitungen (22) mit Leitungsenden, welche wenigstens eine Kontaktiereinheit (12) aufweisen,
eine gehäuseintegrierte Umrichtereinheit (3), insbesondere eine lagerschildintegrierte Umrichtereinheit (3), welche wenigstens ein Kontaktiergegenstück (13, 14) aufweist, wobei das Kontaktiergegenstück (13, 14) sowohl elektrische Kontakte (13) als auch eine Fixiergeometrie (14) aufweist, mittels welcher die Kontaktiereinheit (12) fixiert ist, und mit den elektrischen Kontakten (13) elektrisch leitend verbunden sind.

2. Elektrische Maschine (10) nach Anspruch 1, wobei der Stator (2) in das Gehäuse (5) eingefügt oder eingepresst ist.

3. Elektrische Maschine (10) nach Anspruch 1 oder 2, wobei die Kontaktiereinheit (12) eine Steckkontakiereinheit ist und Buchsen, insbesondere Kunststoffbuchsen aufweist und das Kontaktiergegenstück (13) Pins, insbesondere Kupferpins aufweist oder die Kontaktiereinheit (12) Pins, insbesondere Kupferpins aufweist und das Kontaktiergegenstück Buchsen, insbesondere Kunststoffbuchsen aufweist.

4. Elektrische Maschine (10) nach einem der vorstehenden Ansprüche, wobei die gehäuseintegrierte Umrichtereinheit (3), eine Ausnehmung (14) aufweist, in welcher die Kontaktiereinheit (12) angebracht ist.

5. Elektrische Maschine (10) nach Anspruch 4, wobei die Kontaktiereinheit (12) in die Ausnehmung (14) der gehäuseintegrierten Umrichtereinheit (3) eingefügt oder eingepresst ist.

6. Elektrische Maschine (10) nach einem der vorstehenden Ansprüche, wobei weitere Leitungsenden, insbesondere Leitungsenden von Thermofühlern und/oder Anbauelementen, zusammen mit den Leitungsenden der Wicklungsleitungen (22) in die Kontaktiereinheit (12) münden.

7. Elektrische Maschine (10) nach einem der vorstehenden Ansprüche, wobei weitere Leitungsenden eine weitere Kontaktiereinheit (12) aufweisen, insbesondere Leitungsenden von Thermofühlern und/oder Anbauelementen.

8. Elektrische Maschine (10) nach einem der vorstehenden Ansprüche, wobei zusätzliche Fixierungsgeometrien (14) vorgesehen sind, mittels welcher die gehäuseintegrierte Umrichtereinheit (3) am Stator (2) fixiert ist.

9. Elektrische Maschine (10) nach einem der vorstehenden Ansprüche, wobei zusätzliche Fixierungsgeometrien (14) vorgesehen sind, mittels welcher die gehäuseintegrierte Umrichtereinheit (3) an der Gehäuseinnenwand (5) fixiert ist.

10. Herstellungsverfahren für eine elektrische Maschine (10) nach einem der vorstehenden Ansprüche, umfassend die Montageschritte:
- Anbringen wenigstens einer Kontaktiereinheit (12) an Leitungsenden der Wicklungsleitungen (22) eines Stators (2),
- Axiales Einfügen oder Einpressen des Stators (2) in ein Gehäuse (5),
- Axiales Einschieben einer Umrichtereinheit (3) mit Kontaktiergegenstück (13, 14) in das Gehäuse (5) bis zu einer Endposition der Umrichtereinheit (3), in welcher Endposition Kontaktiereinheit (12) und Kontaktiergegenstück (13, 14) so zusammengefügt sind, dass Stator (2) und Umrichtereinheit (3) elektrisch leitend verbunden sind.

11. Herstellungsverfahren nach Anspruch 10, wobei das Anbringen der Kontaktiereinheit (12) an den Leitungsenden der Wicklungsleitungen (22) eines Stators (2) mittels Crimpen, Stecken oder CageClamp erfolgt.

12. Herstellungsverfahren nach Anspruch 10 oder 11, wobei zusätzlich der Montageschritt des Anbringens wenigstens einer Kontaktiereinheit (12) an weiteren Leitungsenden des Stators (2) erfolgt, insbesondere an Leitungsenden von Thermofühlern und/oder Anbauelementen.

13. Herstellungsverfahren nach einem der Ansprüche 10 bis 12, wobei zusätzlich der Vorabmontageschritt erfolgt, wenigstens eine Fixiergeometrie (14) für die Kontaktiereinheit (12) in der gehäuseintegrierten Umrichtereinheit auszugestalten, insbesondere eine Fixiergeometrie (14) als Aufnahme, insbesondere Ausnehmung oder Ausbuchtung in der Außengeometrie der Umrichtereinheit (3) auszugestalten, in welche Kontaktiereinheit (12) eingeschoben wird.

14. Herstellungsverfahren nach einem der Ansprüche 10 bis 13, wobei zusätzlich der Vorabmontageschritt erfolgt, wenigstens eine Fixiergeometrie (14) für die Kontaktiereinheit (12) in der gehäuseintegrierten Umrichtereinheit auszugestalten, insbesondere eine Fixiergeometrie (14) als Auswölbung, insbesondere Pin oder Nase, auszugestalten, auf welche die Kontaktiereinheit (12) aufgeschoben oder aufgepresst wird.

15. Herstellungsverfahren nach einem der Ansprüche 10 bis 14, wobei wenigstens einer der Montageschritte halbautomatisiert oder automatisiert erfolgt.
